Europäisches Patentamt

European Patent Office

Office européen des brevets

(11) Veröffentlichungsnummer: **0 259 586 B1**

(12) **EUROPÄISCHE PATENTSCHRIFT**

(19)

(45) Veröffentlichungstag der Patentschrift: **11.03.92**

(21) Anmeldenummer: **87110661.3**

(22) Anmeldetag: **23.07.87**

(51) Int. Cl.⁵: **H01Q 1/10**, F16M 11/28, F16H 25/20, F16B 7/10

(54) **Ausfahrverriegelung für teleskopartig längenveränderliche Einrichtungen.**

(30) Priorität: **10.09.86 DE 3630746**

(43) Veröffentlichungstag der Anmeldung:
**16.03.88 Patentblatt 88/11**

(45) Bekanntmachung des Hinweises auf die
Patenterteilung:
**11.03.92 Patentblatt 92/11**

(84) Benannte Vertragsstaaten:
**FR GB IT**

(56) Entgegenhaltungen:
DE-A- 3 049 061      DE-B- 1 260 800
DE-C- 2 603 488      GB-A- 608 362
US-A- 4 062 156      US-A- 4 591 868

(73) Patentinhaber: **DORNIER GMBH
Postfach 1420
W-7990 Friedrichshafen 1(DE)**

(72) Erfinder: **Petrovsky, Peter, Dipl.-Ing.
Birnauer Strasse 17
W-7750 Konstanz(DE)**

(74) Vertreter: **Landsmann, Ralf, Dipl.-Ing.
DORNIER GMBH - Patentabteilung - Kleeweg 3
W-7990 Friedrichshafen 1(DE)**

**Beschreibung**

Die Erfindung betrifft eine Ausfahrverriegelung für Teleskop-Elemente einer, längenveränderlichen Einrichtung mit zum Antrieb beim Vorschub der Teleskopelemente dienenden Vorschubsystem, enthaltend Mutterteile der Teleskopelemente und eine mit diesen zusammenwirkende Antriebsspindel, die einen gewindefreien Magazinabschnitt zur Aufnahme der Mutterteile aufweist, sowie mit Gliedern zur zwangläufigen Koppelung der Teleskopelemente.

Bei derartigen Einrichtungen besteht die Gefahr, daß beim Ausfahren der Teleskopelemente durch Reibung z.B. hervorgerufen durch seitliche Belastungen Teleskopelemente eine Ausfahrbewegung ausführen, die eigentlich bis zum Erreichen der Maximalstellung einander benachbarter Elemente in Rückhaltestellung verbleiben sollten.

Um diesen Nachteil zu vermeiden sind eine Reihe von Lösungen bekannt geworden. So ist es bekannt, für die Freigabe der Teleskopelemente in bestimmter Reihenfolge und in bestimmter Ausfahrstellung einander benachbarter Elemente Klinkenschaltsysteme vorzusehen (DE-PS 26 03 488).

Eine weitere Möglichkeit für die Rückhaltung aneinander geführter Teleskopelemente besteht in der Anordnung von Bohrungen in den Teleskopelementen und mit diesen zusammen wirkenden Bolzensicherungen.

Aufgabe der vorliegenden Erfindung ist es, eine Ausfahrverriegelung für Teleskop-Elemente einer längenveränderlichen Einrichtung wie z.B. Teleskopmasten die als Träger für Antennen oder dergleichen dienen zu schaffen deren Funktion gegenüber den bekannten verbessert ist bei gleichzeitiger Verringerung der Bauelemente und der Vereinfachung des Aufbaus der Verriegelung.

Die gestellte Aufgabe ist erfindungsgemäß nach den Merkmalen des Hauptanspruches und in weiterer vorteilhafter Ausgestaltung nach den Merkmalen der Unteransprüche gelöst.

Eine gemäß der Erfindung ausgebildete Ausfahrverriegelung benötigt keine Steuereinrichtung mit Steuerelementen für die Rückhaltung bzw. Freigabe der Teleskopelemente. Die Verriegelung ist innerhalb der längenveränderlichen Einrichtung in gegen äußere Einflüsse geschützter Lage angeordnet.

Ferner ist die Verriegelung weitgehend unabhängig von den Rohrtoleranzen der Teleskopelemente und es sind außerdem an den Teleskopelementen keinerlei zusätzliche Bauelemente erforderlich.

Bei der Ausführungsform mit zentrischer Anordnung der Rückhaltespindel sind nur geringe Lasten aufzunehmen. Die zusätzlich erforderliche Rückhaltespindel weist das gleiche Gewinde wie das der Antriebsspindel auf. Das zusätzlich erforderliche Getriebe muß wegen der geringen Drehzahl nur geringe Leistungen übertragen.

Bei der Ausführung gemäß der achsparallelen Anordnung der Rückhaltespindel läßt sich der Antrieb der Teleskopelemente unabhängig vom Spindelgewinde entweder durch einen übersetzten Antrieb der Rückhaltespindel oder auch durch entsprechende Gewindeausbildung bewirken.

In der Zeichnung sind zwei Ausführungsbeispiele der Erfindung dargestellt und nachfolgend anhand der Zeichnung näher erläutert.

In der Zeichnung zeigt:

Fig. 1     Die längenveränderliche Einrichtung im Längsschnitt und in schematisierter Darstellung, mit in Ruhestellung befindlichen Teleskopelementen,

Fig. 2     die Einrichtung entsprechend Fig. 1, jedoch demgegenüber in einer anderen Ausfahrzwischenstellung und

Fig. 3     ein weiteres Ausführungsbeispiel der Verriegelung in der Darstellungsweise entsprechend Fig. 1 und 2.

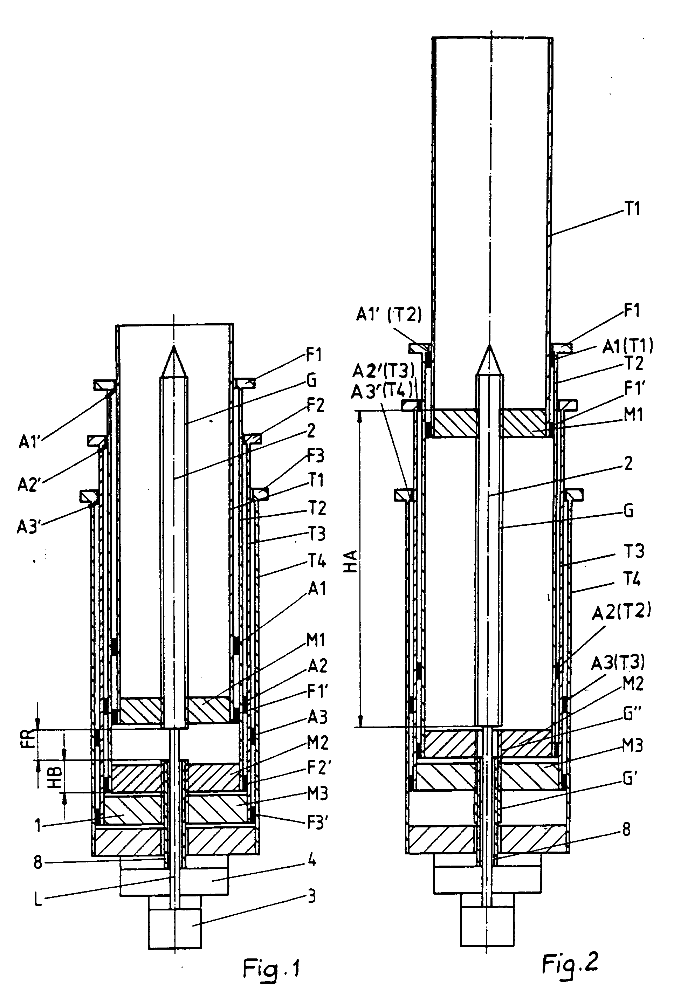

Die in den Figuren 1 bzw. 2 dargestellte Einrichtung enthält konzentrisch ineinander gelagerte, rohrförmige Teleskopelemente T (T1, T2, T3) mit jeweils einem Mutterteil M (M1, M2, M3), eine Gewindespindel 2, sowie eine Spindelantriebsanlage, bestehend aus einem an der Gewindespindel 2 angreifenden Antriebsmotor 3 und einem zwischengeschalteten Übersetzungsgetriebe 4. Das Teleskopelement T4 ist als Führungs- bzw. Trägerteil mittels eines Flansches 1 feststehend angeordnet.

Die Gewindespindel 2 weist einen Gewindeabschnitt G und einen gewindefreien Abschnitt L auf, dessen Durchmesser geringer bemessen ist, als der Bohrungsdurchmesser des Gewindes G" der Mutterteile M, das für den Eingriff in das Gewinde G der Gewindespindel 2 vorgesehen ist.

Bei dem gezeigten Ausführungsbeispiel entspricht die Länge der Antriebsspindel 2 bzw. des Gewindesabschnittes der Spindel etwa der Länge eines der Teleskopelemente T.

Jedes der Teleskopelemente T weist mit dem jeweils benachbarten Element zusammenwirkende Führungen F (F1, F2, F3) zur gegenseitigen Abstützung, sowohl für den Ein- bzw. Ausfahrvorgang, als auch insbesondere für die Endausfahrstellung der Einrichtung auf.

Ferner sind zusammenwirkende Anschläge A (A1, A2, A3) bzw. A' (A1', A2', A3') an den jeweils einander benachbarten Teleskopelementen T (T1, T2, T3) für eine zwangläufige Koppelung innerhalb des Aus- bzw. Einfahrvorganges der Einrichtung gebildet.

Die Gewindespindel 2 trägt auf ihrem gewindefreien Abschnitt L frei drehbar gelargert, jedoch gegen axiale Verschiebung gesichert eine Rückhaltespindel 8, die ein Gewinde G′ gleich dem Gewinde G der Gewindespindel 2 aufweist. Die Rückhaltespindel 8 ist über das Getriebe 4 unabhängig vom Antrieb der Gewindespindel 2 antreibbar.

Zwischen dem Gewinde G der Spindel 2 und dem Gewinde G′ der Rückhaltespindel 8 ist ein Abstand FR belassen, der in seiner axialen Erstreckung größer bemessen ist als die Höhe HB der Mutterteile M. Der Durchmesser des Lager- bzw. Magazinabschnittes L der Gewindespindel 2 im Bereich des Abstandes FR muß, wie bereits ausgeführt, kleiner als der Bohrungsdurchmesser des Gewindes G″ der Mutterteile M bemessen sein.

Die Wirkungsweise des beschriebenen Ausführungsbeispiels ist hierbei wie folgt:

Die längenveränderliche Einrichtung arbeitet nach dem an sich bekannten Prinzip, nach dem die Teleskopelemente T mittels einer Gewindespindel 2, die eine Längserstrekkung etwa entsprechend der Längserstreckung eines der Teleskopelemente T aufweist, aus- bzw. einfahrbar sind, wobei die Elemente T über Anschläge A1 bzw. A1′ miteinander koppelbar und aus einer Magazinstellung in eingriff mit dem Spindelgewinde G bringbar sind. In Endausfahrstellung bleibt dabei das äußere Teleskopelement T3 bzw. in Endausfahrstellung das innere Teleskopelement T1 mit seinem Mutterteil M3 bzw. M1 in Eingriff mit dem Gewinde G der Spindel 2. Bevor ein Mutterteil M z.B. beim Ausfahrvorgang bei Antrieb der Gewindespindel 2 außer Eingriff mit der Gewindespindel 2 kommt, wird zwangläufig das Mutterteil M des benachbarten Teleskopelementes mit dem Gewinde G der Gewindespindel 2 in Eingriff gebracht.

Innerhalb des Ausfahrvorganges wird bei Antrieb der Gewindespindel 2 das Teleskopelement T1 über sein Mutterteil M1 in Richtung auf das freie Spindelende bewegt. Bevor das Mutterteil M1 des Elements T1 außer Eingriff mit der Gewindespindel 2 kommt, wird über den Anschlag A1 am Teleskopelement T1 und den Anschlag A1′ am Teleskopelement T2 das Teleskopelement T2 axial zwangläufig mit dem Teleskopelement T1 gekoppelt und mit diesem mitbewegt. Dabei kommt das Mutterteil M2 mit seinem Gewide G″ in Eingriff mit dem Spindelgewinde G. Kurzzeitig befindet sich gleichzeitig sowohl das Gewinde G″ des Mutterteiles M1 des Teleskopelements T1 als auch das Gewinde G″ des Mutterteiles M2 des Teleskopelementes T2 mit dem Gewinde G der Gewindespindel 2 in Eingriff. Bei Fortsetzung des Ausfahrvorganges tritt das Gewinde G″ des Mutterteiles M1 außer Eingriff mit dem Spindelgewinde G. Danach wird das Mutterteil M1 zwangläufig weitertransportiert durch das Teleskopelement T2 mittels dessen Mutterteil M2.

Um die Ausfahrpositionen der Teleskopelemente T1 bis T3 in Ausfahrstellung gegeneinander zu sichern, dienen Verriegelungen bekannter Ausführung, die hier der Vereinfachung halber nicht dargestellt sind.

Der gleiche wie vorangehend beschriebene Vorgang setzt sich fort bis die Endausfahrstellung der längenveränderlichen Einrichtung durch vollständiges Ausfahren sämtlicher Elemente T erreicht ist.

In Endausfahrstellung bleibt das Mutterteil M3 des zuletzt ausfahrenden Teleskopelementes T3 mit seinem Gewinde G″ im Eingriff mit dem Gewinde G der Gewindespindel 2, so daß aus dieser Lage heraus der Einfahrvorgang eingeleitet werden kann. Der Einfahrvorgang wird durch Umkehrung der Drehrichtung des Antriebsmotors bzw. der Antriebsspindel bezw. Gewindespindel 2 bewirkt.

Erfindungsgemäß sind in Einfahrstellung außer dem, mit dem Gewindeteil G der Gewindespindel 2 im Eingriff befindlichen Mutterteil M1 des Teleskopelementes T1, die übrigen Mutterteile M2 bzw. M3 im Eingriff mit dem Gewinde G′ der Rückhaltespindel 8. Die Rückhaltespindel 8, die beim gezeigten Ausführungsbeispiel ein gleiches Gewinde wie daß der Gewindespindel 2 aufweist, wird bei gleichzeitigem Antrieb der Gewindespindel 2 über das Untersetzungsgetriebe 4 mittels des Antriebsmotors 3 angetrieben.

Dabei gilt für das Übersetzungsverhältnis zwischen den Drehzahlen der Gewindespindel 2 und der Spindel 8 die Beziehung

$$\frac{\text{Drehzahl (Spindel 2)}}{\text{Drehzahl (Spindel 8)}} = \frac{\text{Gewindeabschnitt (HA; Spindel 2)}}{\text{Gewindeabschnitt (HB; Mutterteil M)}}.$$

Bei axialer Verstellung des Teleskopelementes T1 bzw. dessen Mutterteiles M1 durch den Antrieb der Gewindespindel 2, ausgehend von der Stellung gemäß Fig. 1, bewegt sich gleichzeitig, jedoch gegenüber der Gewindespindel 2 mit untersetzter Drehzahl die Rückhaltespindel 8. Dabei werden die beiden Mutterteile M2 bzw. M3 der Elemente T2 bzw. T3 axial in Richtung auf den Freiraum FR bewegt. Das Übersetzungsverhältnis zwischen den Drehzahlen der Spindeln 2 und 8 bewirkt, daß dann, wenn das Mutterteil M1 die

Stellung $HA_{max}$ erreicht hat (Figur 2) und der Anschlag A1 des Elements T1 in Anlage gelangt ist an den Anschlag A1′ des Elementes T2, das Mutterteil M2 außer Eingriff mit dem Gewinde G′ der Rückhaltespindel 8 gelangt und sich im Freiraum FA zwischen dem Gewinde G der Gewindespindel 2 und dem Gewinde G′ der Spindel 8 befindet. Dabei wird das Teleskopelement T2 kurzzeitig weder durch die Gewindespindel 2 noch durch die Spindel 8 angetrieben.

Aus dieser Stellung gelangt das Mutterteil M2 mit seinem Gewinde G″ bei weiterem Antrieb der Gewindespindel 2 infolge der Mitnahme durch die Anschläge A1 bzw. A1′ aus dem Freiraum FR in Eingriff mit dem Gewinde G der Gewindespindel 2.

Bei Erreichen der Stellung $HA_{max}$ durch das Mutterteil M2 hat das nächstfolgende Mutterteil M3 das Gewinde G′ der Rückhaltespindel 8 verlassen, um bei Fortsetzung des Ausfahrvorganges, wie vorangehend bereits beschrieben, über die Anschläge A2 bzw. A2′ zwangläufig aus dem Freiraum FR in Eingriff mit dem Gewinde G der Gewindespindel 2 zu gelangen. Der Einfahrvorgang läuft unter Drehrichtungsumkehr der Gewindespindel 2 bzw. des Antriebsmotor 3 in umgekehrter Reihenfolge ab. Die Anzahl der einsetzbaren Teleskopelemente T ist nicht beschränkt auf die im Ausführungsbeispiel gezeigte Anzahl. Ferner sind die Mutterteile M bzw. die Teleskopelemente T gegen Drehbewegungen um ihre Längsachse durch geeignete Mittel gesichert.

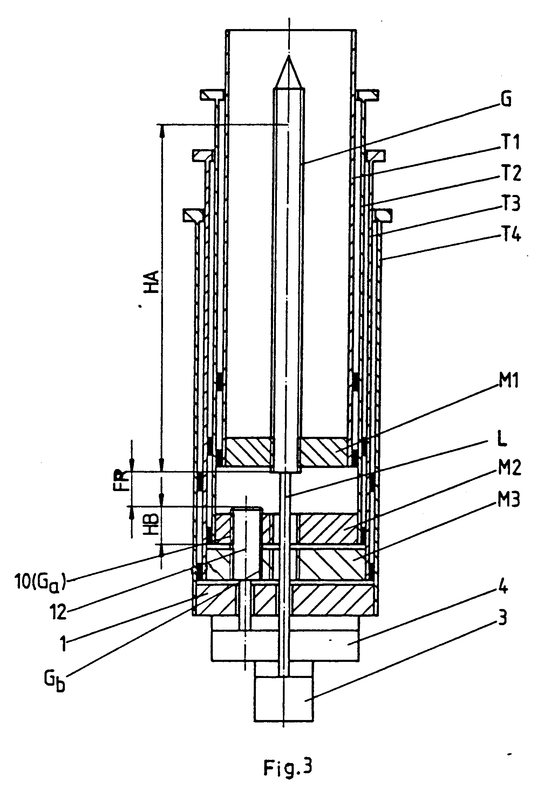

Bei dem in Fig. 3 gezeigten weiteren Ausführungsbeispiel ist das Rückhaltegetriebe gegenüber dem Ausführungsbeispiel nach Figuren 1 und 2 mit seiner Rückhaltespindel 12 zur Spindel 2 achsparallel versetzt angeordnet. Die Mutterteile M weisen hier zusätzlich Bohrungen 10 mit einem Gewinde Ga auf, wobei die Achsen der Bohrungen 10 der Mutterteile M zueinander koaxial liegen und achsparallel zur Längsachse der Spindel 2. In das Gewinde Ga der Muterteile M greift das Gewinde Gb der Rückhaltespindel 12 ein.

Bei Antrieb der Rückhaltespindel 12 werden die Mutterteile M2 bzw. M3 zwangläufig in Richtung auf die Gewindespindel 2 bzw. den Freiraum FR transportiert und an einer unbeabsichtigten Axialbewegung (Ausfahren) während der Ausfahrbewegung des Teleskopelementes T1 gehindert. Nach entsprechend zurückgelegtem Weg schraubt sich das Teleskopelement M2 mit seinem Mutterteil M2 bzw. seinem Gewinde Gb von der Rückhaltespindel 12 bzw. deren Gewinde Ga ab und befindet sich damit im Freiraum FA zwischen dem Spindelgewinde Ga und dem Spindelgewinde G der Antriebsspindel 2.

Mittels der Koppelung der Teleskopelemente T1 und T2 über die Anschläge A1 bzw. A1′ erfolgt die Mitnahme des Teleskopelementes T2 in Ausfahrrichtung und es wird damit das Einfädeln des Gewindes G″ des Mutterteiles M2 auf das Gewinde G der Gewindespindel 2 bewirkt. Der Weitertransport der Elemente T erfolgt dann in der bereits beim Ausführungsbeispiel gemäß Fig. 1 und 2 beschriebenen Weise.

Die Spindel 12 wird beim vorliegende Ausführungsbeispiel mit gegenüber der Gewindespindel 2 untersetzter Geschwindigkeit angetrieben. Es ist jedoch auch denkbar, das Gewinde Ga der Rückhaltespindel 12 und entsprechend das Gewinde Gb der Mutterteile M mit einer geringeren Steigung, als die des Gewindes G der Gewindespindel 2 auszustatten, um zu einer Untersetzung der Verstellbewegung der Mutterteile M auf der Rückhaltespindel 12 gegenüber der Verstellbewegung der Mutterteile M auf der Gewindespindel 2 zu gelangen.

**Patentansprüche**

1. Ausfahrverriegelung für Teleskop-Elemente (T) einer, längenveränderlichen Einrichtung mit zum Antrieb beim Vorschub der Teleskopelemente dienenden Vorschubsystem, enthaltend Mutterteile der Teleskopelemente (M) und eine mit diesen zusammenwirkende Antriebsspindel (2), die einen gewindefreien Magazinabschnitt (L) zur Aufnahme der Mutterteile (M) aufweist, sowie mit Gliedern (A,A') zur zwangläufigen Koppelung der Teleskopelemente, **dadurch gekennzeichnet**,
   - daß dem Antriebsspindel/Mutter-Getriebe (2, G; M, G″) ein getrennt arbeitendes Rückhaltegetriebe (8, G′; M, G″ bzw. 12, Ga, Gb) mit einer Rückhaltespindel (8,12), die ein Gewinde (G';Gb) aufweist, für den Transport der Teleskopelemente (T) in einem Rückhalte-Verstellbereich zugeordnet ist,
   - daß für die Mutterteile (M) zwischen dem AntriebsSpindelgewinde (G) und dem Gewinde (G'; Gb) der Rückhaltespindel (8; 12) ein freier, axialer Abschnitt (FR) ohne Muttervorschub gebildet ist, der größer als die Länge (HB) des Gewindes (G″) eines der Mutterteile (M) ist, und
   - daß die Getriebe (2, G; M, G″ bzw. 8, G′; M, G, bzw. 12, Ga, Gb) für den Teleskopelementen-Vorschub in einem Übersetzungsverhältnis zueinander stehen, nach dem jeweils bei zwangläufiger formschlüssiger Koppelung (A1, A1′) zweier benachbarter Teleskopelemente (T) das nachfolgende Teleskopelement (T) vom Vorschubgetriebe (8, G, G′ bzw. 12; Ga, Gb) in den freien axialen Abschnitt (FR) freigegeben wird.

**2.** Verriegelung nach Anspruch 1, dadurch gekennzeichnet, daß die Gewinde (G und G′) der Spindeln (2 bzw. 8) identisch ausgeführt sind.

**3.** Verriegelung nach Anspruch 1 oder 2, dadurch gekennzeichnet, daß sich die Rückhaltespindel (8) auf einem zum Gewindeabschnitt der Spindel (2) koaxialen Abschnitt frei drehbar, jedoch axial unverschieblich lagert.

**4.** Verriegelung nach Anspruch 1 bis 3, dadurch gekennzeichnet, daß die Rückhaltespindel (8 bzw. 12) über ein von einem Antrieb (3) der Antriebsspindel (2) abzweigendes Untersetzungsgetriebe (4) antreibbar ist.

**5.** Verriegelung nach Anspruch 1 bis 4, dadurch gekennzeichnet, daß das Untersetzungsgetriebe (4) konzentrisch zur Längsachse der Antriebsspindel (2) angeordnet ist.

**6.** Verriegelung nach Anspruch 1 bis 4 bzw. 5, dadurch gekennzeichnet, daß das Rückhaltegetriebe gebildet ist durch eine Rückhaltespindel (12), die achsparallel zur Antriebsspindel (2) angeordnet ist und Bohrungen (10) mit einem dem Spindelgewinde (Ga) entsprechenden Gewinde (Gb) der Mutterteile (M) und achsparalleler Anordnung entsprechend der Spindelachse.

**7.** Verriegelung nach Anspruch 1 bis 6, dadurch gekennzeichnet, daß die Rückhaltespindel (8 bzw. 12) getrennt von der Spindel (2) antreibbar ist.

**8.** Verriegelung nach Anspruch 1 bis 7, dadurch gekennzeichnet, daß die Gewinde (G bzw. G″) der Spindel (2) bzw. der Mutterteile (M) und die Gewinde (Ga) der Rückhaltespindel (12) bzw. die Gewinde (Gb) in den Mutterteilen (M) zu Über- bzw. Untersetzung der Vorschubbewegung der Teleskopelemente (T) im Bereich der Spindel (2) bzw. im Bereich der Rückhaltespindel (12) unterschiedliche Steigung aufzuweisen.

**Claims**

**1.** Extension lock for telescopic elements (T) of a longitudinally adjustable device with an advance system serving as a drive when the telescopic elements are advanced, comprising nut sections of the telescopic elements (M) and a drive spindle (2) which cooperates with the latter and comprises a thread-free magazine section (L) for accommodating the nut sections (M), as well as with members (A, A') for the forced coupling of the telescopic elements, characterised in that:
- a separately operating retaining gearing (8, G'; M, G" or 12, Ga, Gb) with a retaining spindle (8, 12) comprising a thread (G', Gb), for transporting the telescopic elements (T) in a retaining adjusting area is associated with the drive spindle/nut gearing (2, G; M, G");
- in that for the nut sections (M) between the drive spindle thread (G) and the thread (G'; Gb) of the retaining spindle (8; 12) there is formed a free axial section (FR) without nut advance which is greater than the length (HB) of the thread (G") of one of the nut sections (M); and
- in that the gearings (2, G; M, G" or 8, G'; M, G or 12, Ga, Gb) for the telescopic element advance are in a transmission ratio with respect to one another according to which in each case when two adjacent telescopic elements (T) are coupled together (A1, A1') in a forced form-locking manner, the subsequent telescopic element (T) is released from the advance gearing (8, G, G' or 12; Ga, Gb) in the free axial section (FR).

**2.** Lock according to Claim 1, characterised in that the threads (G and G') of the spindles (2 and/or 8) are of identical construction.

**3.** Lock according to Claim 1 or 2, characterised in that the retaining spindle (8) is mounted on a section which is coaxial with respect to the threaded section of the spindle (2) in a freely rotatable yet axially non-displaceable manner.

**4.** Lock according to Claims 1 to 3, characterised in that the retaining spindle (8 and/or 12) can be driven by means of a reduction gear unit (4) branching off a drive (3) of the drive spindle (2).

**5.** Lock according to Claims 1 to 4, characterised in that the reduction gear unit (4) is disposed concentrically with respect to the longitudinal axis of the drive spindle (2).

**6.** Lock according to Claims 1 and 4 and/or 5, characterised in that the retaining gearing is formed by a retaining spindle (12) which is disposed axially parallel to the drive spindle (2) and bores (10) having a thread (Gb) of the nut sections (M) corresponding to the spindle thread (Ga) and an axial parallel arrangement according to the spindle axis.

**7.** Lock according to Claims 1 to 6, characterised in that the retaining spindle (8 or 12) can be driven separately from the spindle (2).

**8.** Lock according to Claims 1 to 7, characterised in that the threads (G or G") of the spindle (2) or of the nut sections (M) and the threads (Ga) of the retaining spindle (12) and/or the threads (Gb) in the nut sections (M) have different degrees of inclination for the multiplication or reduction of the advance movement of the telescopic elements (T) in the vicinity of the spindle (2) or in the vicinity of the retaining spindle (12).

**Revendications**

**1.** Verrouillage de déploiement pour des éléments télescopiques (T) d'un dispositif à longueur variable, avec un système d'avancement destiné à l'entraînement lors de l'avancement des éléments télescopiques, comprenant des éléments d'écrou des éléments télescopiques (M) et une broche d'entraînement (2) coopérant avec lesdits éléments d'écrou et présentant une section de magasin (L) dépourvue de filetage destinée à recevoir les éléments d'écrou (M), ainsi que des organes (A, A') pour le couplage automatique des éléments télescopiques, **caractérisé en ce**
   - qu'au système de broche d'entraînement/écrou (2, G; M, G") est associé un mécanisme de retenue (8, G'; M, G" et respectivement 12, Ga, Gb) avec une broche de retenue (8, 12) munie d'un filetage (G', Gb) pour le transport des éléments télescopiques (T) dans une zone de réglage de retenue,
   - qu'une section axiale libre (FR) sans avance d'écrou qui est plus grande que la longueur (HB) du filetage (G") de l'un des éléments d'écrou (M) est conformée pour les éléments d'écrou (M), entre le filetage (G) de la broche d'entraînement et le filetage (G'; Gb) de la broche de retenue (8, 12), et
   - que les mécanismes (2, G; M, G" et respectivement 8, G'; M, G et respectivement 12, Ga, Gb) pour l'avancement des éléments télescopiques présentent un rapport de transmission tel qu'à un couplage automatique à engagement positif (A1, A1') de deux éléments télescopiques (T) voisins succède à chaque fois la libération de l'élément télescopique (T) suivant par le mécanisme d'avancement (8, G, G' et respectivement 12; Ga, Gb) dans la section axiale libre (FR).

**2.** Verrouillage selon la revendication 1, caractérisé en ce que les filetages (G et G') des broches (2 et respectivement 8) présentent une conformation identique.

**3.** Verrouillage selon l'une des revendications 1 ou 2, caractérisé en ce que la broche de retenue (8) repose sur une section coaxiale à la section filetée de la broche (2) de manière à pouvoir tourner librement mais immobile dans le sens axial.

**4.** Verrouillage selon l'une des revendications 1 à 3, caractérisé en ce que la broche de retenue (8 et respectivement 12) peut être entraînée par l'intermédiaire d'un démultiplicateur (4) dérivant d'un entraînement (3) de la broche d'entraînement (2).

**5.** Verrouillage selon l'une des revendications 1 à 4, caractérisé en ce que le démultiplicateur (4) est disposé concentriquement par rapport à l'axe longitudinal de la broche d'entraînement (2).

**6.** Verrouillage selon l'une des revendications 1 et 4 et respectivement 5, caractérisé en ce que le mécanisme de retenue est constitué par une broche de retenue (12) disposée parallèlement à l'axe de la broche d'entraînement (2) et par des alésages (10) avec un filetage (Gb) des éléments d'écrou (M) correspondant au filetage (Ga) de la broche et une disposition parallèle à l'axe conformément à l'axe de la broche.

7. Verrouillage selon l'une des revendications 1 à 6, caractérisé en ce que la broche de retenue (8 et respectivement 12) peut être entraînée séparément par la broche (2).

8. Verrouillage selon l'une des revendications 1 à 7, caractérisé en ce que les filetages (G et respectivement G") de la broche (2) et respectivement des éléments d'écrou (M) et les filetages (Ga) de la broche de retenue (12) et respectivement les filetages (Gb) dans les éléments d'écrous (M) présentent, pour la multiplication ou la démultiplication du mouvement d'avance des éléments télescopiques (T), des pas de vis différents dans la région de la broche (2) et respectivement dans la région de la broche de retenue (12).

Fig.1

Fig.2

Fig.3